# EUROPEAN PATENT APPLICATION

(11) **EP 4 840 308 A1**
(43) Date of publication of application: **18.11.2026**
(21) Application number: 25176975.8
(22) Date of filing: 16.05.2025
(51) Int. Cl.: A01M 7/00, G06V 20/10

(54) **SYSTEM AND METHOD OF GENERATING A VARIABLE RATE APPLICATION MAP FOR ROW CROPS**

(71) Applicant: Yara International ASA, 0277 Oslo (NO)
(72) Inventor: REUSCH, Stefan, 0277 Oslo (NO); PORTZ, Gustavo, 0277 Oslo (NO); RATHEE, Geetika, 0277 Oslo (NO); KYERE, Isaac, 0277 Oslo (NO); CAMPUZANO CASTELLANO, Clara, E-28020 Madrid (ES); JOSE GARCIA MORENO, Juan, E-28020 Madrid (ES); GARCIA ALVARO, Alejandro, E-28020 Madrid (ES)
(74) Representative: AWA Sweden AB

(57) **Abstract**

The present disclosure concerns a computer-implemented method of generating a variable rate application map of an agricultural product for row crops in an agricultural field, comprising: determining an agricultural field comprising a row crop; receiving remote imagery of the agricultural field; generating a grid of polygons; determining an agricultural property for the generated grid of polygons based on the received remote imagery; determining an agricultural product application rate for the grid of polygons based on the determined agricultural property; generating a variable rate application map of the agricultural product for the agricultural field based on the determined agricultural product application rate for the grid of polygons.

## Description

### Technical field

The present disclosure relates to a method and system for the generation of a variable rate application map for row crops in the field of precision agriculture.

### Background

The application of agricultural products for orchards and fields with other type of row crops is usually carried out by means of foliar applications, in form of sprayed products, or under the plant canopy in form of spread products, which increase the product efficiency and plant development at specific stages of growth during the season.

While newer application systems and agricultural machines may comprise several sensors which can allow a targeted and / or variable application rate of the agricultural products, most of the available application systems are set at a fixed application rate. The fixed application rate is used throughout the orchard or field to which the agricultural product is applied, in order to ensure an accurate application of the product. Hereinbelow, the terms orchard, agricultural field, and field may be used interchangeably.

For these application systems, the application rate is therefore independent of the vegetation properties of the crop and of local crop variations. This type of product application is especially inefficient in areas where no crops are present. Given that row crops usually are positioned interspersed within the individual rows, separated by spaces where no crop at all is present, the agricultural product is just thrown into the air at these spaces, or wrongly applied onto the soil in the case of foliar spraying applications or in case of spread products. Such application is inefficient and wasteful, with large accumulated losses over the entire field, resulting in economic losses and possible environmental issues.

In order to address these issues and to provide a fully adapted variable application rate of agricultural products, costly sensor arrangements and/or retrofitting of older spraying machinery are needed. Sometimes, more advanced agricultural machinery might comprise acoustic (e.g. ultrasonic or equivalent) or optical (e.g. photoelectric or photosensing) sensors, configured to detect the crop presence, which cut-off the application of the agricultural product when an area with no crops is detected. However, most of these sensors are unable to detect variations in plant density, biomass or nutrient status. Consequently, the application rate is not adapted to local crop variations and needs. Furthermore, many agricultural fields are in remote areas, far from more populated areas and communications infrastructure. Consequently, agricultural machinery cannot always establish a remote connection to data services. Therefore, it may be required to upload or download, product application maps prior to the application of the agricultural product, allowing a greater flexibility for the agricultural machines during the application, and possibly reducing dependence on unreliable connections to remote data services.

There is therefore a need for providing variable rate application maps based on remote imagery and the available information for the field. Thereby, the agricultural product is efficiently applied to the target crops, in order to reduce costs and to avoid wasting the product, hereby reducing the environmental impact of the applied products. Furthermore, the need for expensive sensing systems to be retrofitted to the existing machinery, or the acquisition of new costly machinery should preferably be avoided.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### Summary

According to a first aspect of the present disclosure, this and other objectives are achieved by a computer-implemented method of generating a variable rate application map of an agricultural product for row crops in an agricultural field, wherein the method comprises determining an agricultural field comprising a row crop; receiving remote imagery of the agricultural field; generating a grid of polygons; determining an agricultural property for the generated grid of polygons based on the received remote imagery; determining an agricultural product application rate for the grid of polygons based on the determined agricultural property; generating a variable rate application map of the agricultural product for the agricultural field based on the determined agricultural product application rate for the grid of polygons.

Following this approach, an accurate variable rate application map can be determined.

According to a second aspect of the present disclosure, the method further comprises determining at least one of a first dimension and/or a second dimension of the polygons based on at least one of an agricultural machine property, a predetermined constraint, crop data or field data.

Following this approach, the grid of polygons can be adapted to the agricultural field.

According to a third aspect of the present disclosure, the method further comprises the polygons being parallelograms and wherein generating a grid of parallelograms comprises determining at least one of tramlines and/or crop rows present in the agricultural field; determining at least one specific dimension based on the determined tramlines and/or row crops; and defining the parallelogram width based on the determined specific dimension.

Following this approach, a regular grid of polygons can be determined. Thereby, the grid may be adapted to the crop spacing in the field.

According to a fourth aspect of the present disclosure, generating a grid of polygons comprises determining an orientation of the at least one of tramlines or crop rows and at least one of rotating the generated grid of polygons to match the determined orientation or translating the grid to match the tramlines or crop rows.

Following this approach, the grid of polygons can be aligned with the row crops. Thereby, the accuracy of the grid may be improved.

According to a fifth aspect of the present disclosure, determining an agricultural property for the generated grid of polygons comprises: determining the number of pixels comprised in a polygon; generating an agricultural property value for the determined pixels and determining an agricultural property amount for the polygons based on the agricultural property value for the determined pixels comprised in the polygon.

Following this approach, an accurate and stable agricultural property amount for each polygon can be determined.

According to a sixth aspect of the present disclosure, determining the number of pixels comprised in the polygon further comprises identifying the number of pixels unrelated to the row crop.

Following this approach, computational effort may be reduced, and the agricultural property amount is more accurately determined.

According to a seventh aspect of the present disclosure, receiving remote imagery of the agricultural field further comprises receiving historic remote imagery from the on-going or previous seasons, processing the historic remote imagery and adjusting the agricultural property amount based on the received historic remote imagery.

Following this approach, further insights of the agricultural field can be considered for the determination of the application map. Furthermore, by utilizing historic data the accuracy of the application map may be improved.

According to an eight aspect of the present disclosure, processing the historic remote imagery further comprises identifying at least one of cover crops or weed pixels, and adjusting the agricultural property comprises adjusting the agricultural property based on the identified at least one of cover crops or weed pixels.

Following this approach, the agricultural property amount can be more accurately determined. Furthermore, wasteful use of agricultural product on weeds or other undesirable growth may be prevented.

According to a ninth aspect of the present disclosure, processing the historic remote imagery further comprises receiving row crop type and carrying out at least one of background subtraction, clustering, thresholding based on the row crop type.

Following this approach, relevant information is extracted from the historic remote imagery. Consequently, the historic remote imagery can be more effectively used for determining the agricultural property amount.

According to a tenth aspect of the present disclosure, the method further comprises producing a machine-readable script based on the variable rate application map.

Following this approach, the variable rate application map can be directly uploaded to an agricultural machinery.

According to a further aspect of the present disclosure, the method further comprises implementing the variable application rate by means of an agricultural machine configured to carry out the agricultural product application.

Following this approach, the agricultural product application can be achieved.

According to further aspects, a system, a data processing apparatus, a computer-readable storage medium, and a computer program product configured to carry out the above discussed methods are envisaged within the present disclosure.

### Brief description of the drawings

The accompanying drawings, which are included to provide a further understanding of the present disclosure and are incorporated in and constitute a part of this specification, illustrate embodiments of the disclosure and together with the description serve to explain the principles of the disclosure.
Fig. 1A shows a schematic representation of a system according to an embodiment of the present disclosure.
Fig. 1B shows a representation of an agricultural machine and an orchard according to one field of application of the present disclosure.
Fig. 2A and 2B show different grids of polygons generated on an agricultural field.
Fig. 3A and 3B show flowchart diagrams of methods according to different embodiments of the current disclosure.
Fig. 4A shows the value of an agricultural property for the pixels of a polygon of a generated grid.
Fig. 4B shows the identification or masking of different pixels within the remote imagery of an agricultural field.
Fig. 5 shows an example of a regular grid according to one embodiment of the current disclosure with different masked regions.

### Detailed Description

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilized and structural or logical changes may be made without departing from the scope of the present application. The following detailed description, therefore, is not to be taken in a limiting sense, and the scope of the present application is defined by the appended claims.

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

Unless defined otherwise, all terms present in the current disclosure, including technical and scientific terms, have the meaning which a person skilled in the art usually gives them. For further guidance, definitions are included to further explain terms which are used in the description of the disclosure.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the application, and form different embodiments, as would be understood by those in the art. For example, in the appended claims, any of the claimed embodiments can be used in any combination.

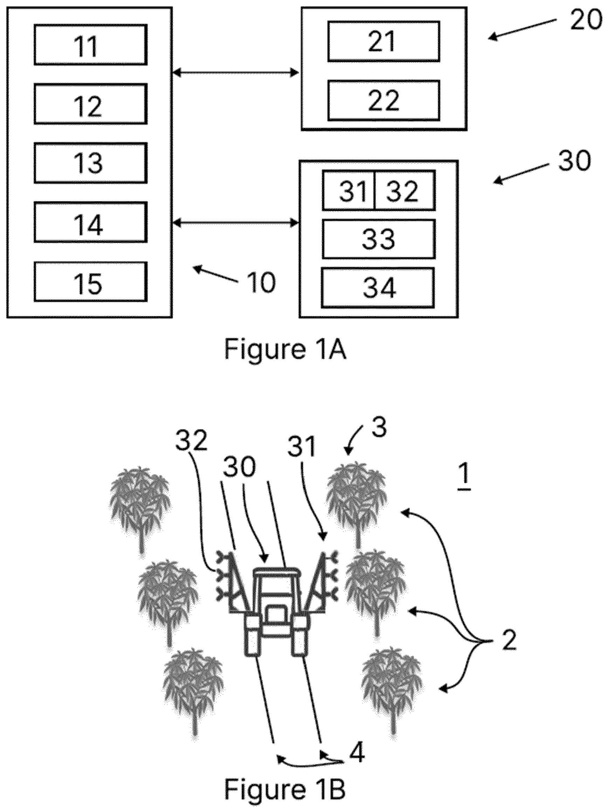

Fig. 1A shows a schematic representation of a system according to an embodiment of the present disclosure. System 10 represents a general-purpose computer or any other kind of electronic processing device. System 10 may, for instance, be a laptop computer, but it is not limited thereto and may be a mobile device, a server - client architecture, a workstation, a tablet computer, a PC, or the like. System 10 comprises, as usual, a processing unit 11 configured to carry out the method of the current disclosure, and a memory unit 12 configured to store instructions, which when executed by the processing unit 11 cause the system 10 to carry out the method of the current disclosure. System 10 may further comprise an input unit 13 (e.g. a mouse, a keyboard a touch sensitive surface or similar) configured to receive the user input for selecting system configuration options, an output unit 14 (e.g. a display, a printer or the like) configured to display information about the internal states of the system and agricultural information and one or more accessory subsystem units 15 (e.g. further processing units, a GPS unit, a graphics unit, ...). System 10 comprises a communication unit (not shown) configured to establish communication between the different units and subunits of system 10 and receive external data. System 10 may further comprise subsystems or units as defined within the usual elements of an electronic device and will not be further described herein. Correspondingly, each unit of system 10 is operatively connected with the remaining units via the communication unit as customary in the current practice and won't be further discussed here. System 10 may be operatively connected to a plurality of data inputs represented by data input unit 20. Data input unit comprises at least one (21, 22, ...) database or at least one external data source. System 10 may further be operatively connected to at least one agricultural machine 30.

System 10 comprises remote data. System 10 may further comprise field data, farm data and / or external data. The field data, farm data and / or external data may be stored internally, e.g., in memory unit 12, or stored externally, e.g., in accessible databases like data input unit 20. Remote data comprises remote imagery data as provided by satellite platforms or from suitable manned or unmanned imaging aerial vehicles, as it will be further discussed below. Remote imagery data may include stored sets of data, such as stored historical data, or real-time data directly from the satellite platforms. Field data may include field properties, topographic data, crop data, harvest data, weather data and / or soil data, as well as historic series of the aforementioned data. Field properties may include field and geographic identifiers regarding the geometry of the boundaries of the agricultural field. The field and geographic identifiers may further include data concerning the presence of areas within the agricultural field which are not managed. Topographic data may include one or more of digital terrain data, absolute or relative height data, spatial coordinates and the like. Crop data may include one or more of crop variety, crop type, growth status, planting data, planting date, plant nutrition status, plant health status, row planting location, i.e. row spacing and/or plant spacing within the row, and the like. Harvest data may include one or more of yield, value, product quality, and / or estimated or recorded historic harvest values. Weather data may comprise current, future and historic weather data, and comprise at least one of wind data, such as wind direction and windspeed, temperature, solar irradiance, sunshine hours, snow or frosting indicator scores, precipitation data, and the like. Precipitation data may comprise at least one of an amount of rain per square surface unit, average precipitation amount per time unit (e.g., day, week, season, year), or the like. Temperature data may comprise at least one of a temperature value or hourly, daily, weekly, monthly or yearly average temperature, minimum and maximum temperatures, or sum thereof and the like. Weather data is publicly and widely available from different providers and may be obtained and/or simulated locally. Soil data may include one or more of soil type, soil pH, soil organic matter (SOM), and/or cation exchange capacity (CEC), amongst others. Soil data may be accessed or retrieved from widely available private or public soil repositories (LUCAS, SSURGO, ...). The present disclosure is not intended to be limited to any specific soil databases and the use of local databases or storage units comprising soil data is as well comprised within the teachings of the current disclosure. Farm data may comprise data concerning planned and past agricultural tasks, like field maintenance practice data, agricultural practice data, fertilizer application data, pesticide application data, irrigation data and / or other field reports, as well as historic series of the aforementioned data. The historic series allow the comparison of present data with past data. The farm data may further include administrative data, like work shifts, work logs and other organizational data. Planned and past tasks may comprise activities like surveillance of plants and pests, application of insecticides, fungicides or crop nutrition products containing nutrients or bio-stimulants, measurements of at least one farm or field parameter, maintenance and repair of ground hardware and other similar activities.

Fig. 1B shows a schematic representation of an orchard or agricultural field comprising crops 1 in a row arrangement according to the general field of application of the current disclosure. Within the present disclosure, orchard shall be understood as any agricultural field with crops planted in a row configuration. The terms orchard, agricultural field and field may be used interchangeably. Suitable crops for such settings are vines, such as planted in vineyards, fruit trees and plants, such as pear, apple, olive, coffee, or the like, and nut trees and plants, such as almond, walnut, amongst others. The crops may either be evergreen or deciduous. In any case the type of crops are not limited to any of the aforementioned examples. In general, the method of the current disclosure can be applied, referring to fig. 1B, to crops in which a plurality of plants or trees 2 are arranged in a row 3 formation, with a predetermined space between individual trees or plants, even if minimal. A plurality of these rows are arranged over the agricultural field in a substantially parallel configuration, with another predetermined distance between the rows. As can be seen in fig. 1B, agricultural machine 30 may drive along the row crops and is configured to apply the agricultural product onto the crop rows. Further, as discussed below, fig. 1B shows tramlines 4, which may be present between adjacent rows and are left behind as a mark on the field from the transit of agricultural machinery or other vehicles during operation. This will lead to further advantageous modifications of the current disclosure which will be explained below.

With continued reference to fig. 1B, for the treatment of the crops, at least one agricultural machine (e.g. sprayer or spreader tractor, towed sprayer or spreader attachments attached to a tractor, drones, or equivalents) 30 is used for the foliar application, or the application to the soil under the plant canopy, of one or more agricultural products (e.g. fertilizers, pesticides, ...). Referring to fig. 1A and 1B, where the same reference signs indicate the same feature when displayed, agricultural machine 30, represented in this case like a vertical sprayer, comprises an application unit 31, formed by at least one nozzle 32 configured to apply the agricultural product onto the row crops or the soil under them. The application unit 31 further comprises a container (not shown) with the agricultural product to be applied. The agricultural machine 30 further comprises a processing unit 33, configured to process a variable application rate map such that the processing unit 33 can instruct the application unit 31 to deliver a specific amount of agricultural product at the respective location as indicated by the variable application rate map. The agricultural machine 30 further comprises at least one positioning unit 34 , such as a GPS unit or any equivalent, such that the processing unit 33 can compare the actual position of the agricultural machine 30 with the specific application rate as defined in the variable application rate map for said position.

In an advantageous embodiment, the agricultural machine 30, as a spraying unit, comprises at least one first nozzle configured to spray to one side of the agricultural machine 30 and at least one second nozzle configured to spray to the other side of the agricultural machine 30. Preferably, the at least one first and at least one second nozzles are independently configurable to discharge agricultural product at a first application rate and a second application rate. Thereby, the different rows on either side of the agricultural machine 30 can receive an adequate and specific amount of agricultural product. The agricultural machine 30 may further comprise input/output interfaces and other subsystems as customary within the state of the art. According to a further embodiment, the agricultural machine 30 may comprise acoustic (e.g. ultrasonic or equivalent) or optical (e.g. photoelectric or photosensing) sensors. The sensors may be mounted on one side, or on both sides, of the agricultural machine 30. The sensors may be configured to determine if a crop is present. Accordingly, the agricultural machine 30 may comprise, within the application unit 31, a first and a second opening to apply the product independently and at different rates at each side of the agricultural machine. In this case, the agricultural machine 30 may preferably be a spreader. Alternatively, the application unit 31 may include means to vary the application rate accordingly for one side and the other side of the agricultural machine 30.

Agricultural machine 30 may be configured to be connected to system 10 by means of usual wired or wireless networks, such as Bluetooth, Zigbee, or any other mobile data network, although the current disclosure is not limited to such examples. In further alternatives, the agricultural machine 30 may be configured to receive the variable application rate maps by means of hardware means (USB) or any other suitable connection. According to an alternative embodiment, system 10 may be included in agricultural machine 30, e.g. system 10 may be embedded in the architecture of the agricultural machine 30.

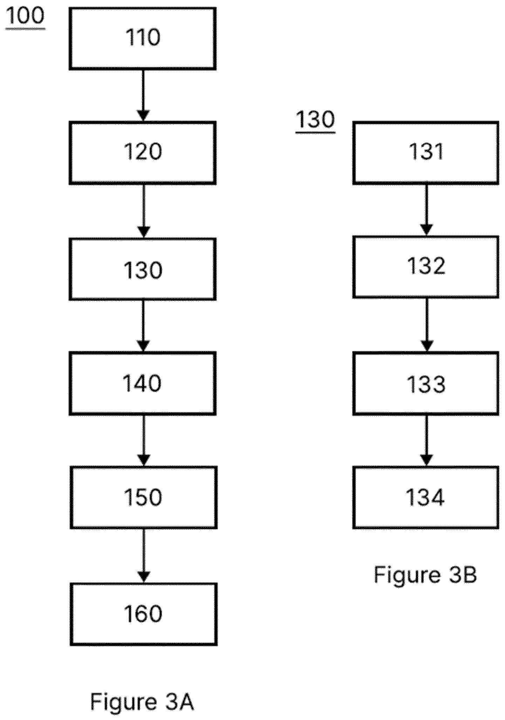

According to the main embodiment and referring to fig. 3A, a method of generating 100 a variable rate application map of an agricultural product for row crops in an agricultural field, according to the present disclosure, comprises determining 110 an agricultural field comprising a row crop and receiving 120 remote imagery of the agricultural field.

The present application makes use of suitable remote or proximal imagery for determining an agricultural property. For the purposes of the current disclosure, very high-resolution imagery is needed in order to accurately detect the crop row elements, hereby referring to spatial resolutions under 5 m per pixel, more preferably under 1 m per pixel. Remote imagery may include any suitable spectral data or RGB images provided by imaging satellites or suitable manned or unmanned imaging aerial vehicles, as known in the art, provided either in real-time, or in a time closely related to the time of application of the agricultural product. These satellite or aerial vehicles are configured to communicate by means of dedicated networks and usual methods with system 10, via the communication unit and do not need to be further described herein. Amongst the different remote imagery available for use, satellite data is nowadays widely available from numerous public and/or private providers. Any such satellite data can be utilized, as long as they satisfy the aforementioned resolution requirements. The present method is however not limited to a single satellite data platform, since the spectral bands which can be of use for the present method may be obtained from a wide range of standard available satellite data. Moreover, although referred to as remote imagery or spectral data, any imaging device capable of capturing images at different wavelengths can be used within the current disclosure, including manned or unmanned aerial vehicles equipped with camera devices configured to scan a substantial area of the agricultural field.

With continued reference to fig. 3A, the method further comprises generating 130 a grid of polygons. According to the present disclosure, a grid of polygons is to be understood as a concatenation of polygons in two dimensions, spanning the extent of the agricultural field as defined by the field boundaries. The polygons, according to the present disclosure, may be regular or irregular, of different shapes (e.g. squares, rectangles, triangles, pentagons, hexagons, ...) and different types (e.g., Delaunay or Voronoi triangles). Based on field data from the determined agricultural field, or based on user input, the method of the current disclosure comprises generating a grid of polygons for at least a part of the agricultural field comprising crops, or for the entire agricultural field.

The method further comprises determining 140 an agricultural property for the generated grid of polygons based on the received remote imagery and determining 150 an agricultural product application rate for the grid of polygons based on the determined agricultural property.

Following the disclosure above regarding the use of remote imagery, the method of the current disclosure further comprises processing the remote imagery or spectral data as obtained from the remote satellite or from suitable aerial vehicles.

Further preprocessing, compensation and calibration algorithms are considered within the present application, depending on the nature and origin of the remote imagery or data. In one embodiment, remote imagery or data is preprocessed for cloud and haze removal and light calibration. Such preprocessing is of advantage in case the remote imagery or data is provided by means of a satellite, as described above, given that satellite images may be affected by cloud cover and / or haze. In another embodiment, when the remote data is provided by a manned or unmanned aerial vehicle (UAV) or drone, cloud correction may not be needed, but different light compensation procedures are envisaged to compensate for the sunlight characteristics and the sun's relative position to the UAV or drone.

Determining 140 an agricultural property for the generated grid of polygons based on the remote imagery or data may comprise generating at least one coefficient derived from the remote imagery or data. Different coefficients (or indices) have been used in the literature for obtaining different agricultural, soil and vegetation properties like the difference vegetation index and the normalized difference vegetation index (NDVI). However, the NDVI is sensitive to the effects of soil brightness, soil color, atmosphere, clouds, cloud shadows, and leaf canopy shadows and requires remote sensing calibration. In that sense, further coefficients contemplated may comprise the Atmospherically Resistant Vegetation Index (ARVI) to reduce the dependence on atmospheric effects; the Soil-Adjusted Vegetation Index (SAVI) or the Type Soil Atmospheric Impedance Vegetation Index (TSARVI) which take into consideration the distinction of vegetation from the different types of soil background. Apart from the standard vegetation indices comprised in the state of the art, the present application may make use of further indices which will be described in more detail below. However, the approaches described hereinbelow are not limiting for the disclosure of the current application, and other means of processing the remote imagery or data of suitable spectral bands or any combination thereof to generate a respective vegetation index can be envisaged for determining an agricultural property. For example, within the present disclosure, machine learning approaches based on previous sets of remote imagery and on tested agricultural product application rates, image processing based on specific characteristics of the remote imagery, and other alternative methods may be considered.

Usual vegetation indexes or coefficients used in the field of remote sensing for the determination of agricultural properties, including crop biomass, crop moisture, crop nutrient status and other agricultural properties, include the NDVI. The NDVI may be computed as follows: NDVI = (NIR-RED)/(NIR+RED), wherein NIR represents the reflectance value related to the Near Infrared wavelengths, at a wavelength range of about 750-950 nm and wherein RED represents the reflectance measurements acquired in the red visible spectrum, at a wavelength range of about 600-700 nm. Other indices include the Normalized Difference Water Index (NDWI), expressed as NDWI = (NIR-SWIR) / (NIR+SWIR). Here, NIR represents again the aforementioned Near Infrared wavelengths, and SWIR represents the Short-Wave Infrared wavelengths, at a wavelength a range of about 840-2200 nm, always depending on the different satellite platforms. These and other indices can be envisaged within the present disclosure. By determining the chlorophyll content, directly related to the crop leave volume and nitrogen content, and the dry fresh biomass given as an indication by vegetation coefficients, a more accurate determination of a crop nutrient status can be carried out. The nutrient determination can be used for fertilization applications. However, for the application of other agricultural products (e.g. fungicides, bio-stimulants, ...), a different agricultural property may be utilized, like the biomass or the water content.

Based on the determined agricultural property for the individual polygons, determining 150 an agricultural product application rate for the individual polygons can be achieved. Hereby, derived from the specific agricultural property, an amount of agricultural product for the respective polygon can be generated. For example, for a determined amount of biomass within a specific polygon, the right amount of agricultural product can be determined.

The method further comprises generating 160 a variable rate application map of the agricultural product for the agricultural field based on the determined agricultural product application rate for the grid of polygons. According to the present disclosure, variable rate application maps are digital maps that provide detailed, location-specific information about the amounts of agricultural products to be applied to a crop in an agricultural field. Thereby, an application map provides valuable information, for instance on where to apply the right amount of agricultural product and where not to apply the product. Application maps are digital instructions configured to be read by an agricultural machine such that the application unit of the agricultural machine can be instructed to adapt the rate of application of the agricultural product at each location within the field. Different standards can be used to generate an application map to comply with formats implemented by different agricultural machinery manufacturers. Deriving the application map from a set of location dependent values in order to indicate the product application rate at each location needs not being further discussed herein. Once an application map has been generated, the application map may be directly inputted to the agricultural machine 30. Advantageously, a user, such as a farmer or operator, may then only have to direct the agricultural machine through the agricultural field.

According to a further embodiment, with reference to fig. 3B, generating 130 a grid of polygons comprises determining a first dimension 131 and/or determining 132 a second dimension of the polygons based on at least one of an agricultural machine property, a predetermined constraint, crop data or field data. For example, according to an embodiment the polygons are triangles. The triangles are oriented such that the height of a triangle aligns with the moving direction of the agricultural machine 30, i.e., the triangle 'points' in the moving direction. Preferably, the moving direction of the machine 30 may be substantially parallel to the crop rows 3. The triangles can further be determined so as to span at least one of the length comprising a tree or plant 2 and/or the space between neighboring trees or plants. Analogously, the base of the triangle, defined therefore in the direction perpendicular to the moving direction of the agricultural machinery 30, can be defined to be equal or half the distance between neighboring tramlines 4 or crop rows 3. These dimensions may be retrieved from field data, user input or from remote imagery, as it will be explained further below.

According to a further embodiment, the polygons are parallelograms and generating a grid of parallelograms comprises determining a length of the parallelograms, defined as the dimension along the moving direction of the agricultural machine 30, based at least on one of an agricultural machine property, a predetermined constraint, crop data or field data. Preferably, the moving direction may be substantially parallel to the crop rows 3. For example, according to a further embodiment, based on a predetermined moving speed of the agricultural machine, the length of the parallelograms can be limited based on the actuating speed of the application unit, such that the application unit can adjust the application rate accurately enough. According to a further embodiment, the crop data may comprise a tree spacing distance and the length of the parallelograms may be determined based on the tree spacing distance. According to a further embodiment, the length of the parallelograms may be constant throughout the field, or variable within at least a subpart of the agricultural field.

According to a further embodiment, the polygons are parallelograms and generating a grid of parallelograms comprises determining at least one of tramlines and/or crop rows present **in** the agricultural field, determining at least one specific dimension based on the spacing between the determined tramlines and/or crop rows; and defining the parallelogram width based on the determined specific dimension.

For example, with reference to fig. 1B, the agricultural fields may include tramlines 4 between the crop rows 3. Tramlines may generally refer to markings, or tracks, left by agricultural machinery previously driving across a field, specifically by repeatedly driving along the same path or trajectory. Tramlines can be utilized as a path across the field that the agricultural machines 30 may take for the application of the agricultural product. Tramlines 4 may be detected by means of image processing and / or similar adequate techniques, from satellite imagery or UAV imagery, as disclosed **in** WO 2023/247229 A1, hereby incorporated by reference. Alternatively, or additionally, tramlines may be determined, within the current disclosure, from field data received from the agricultural machine 30, wherein the path or trajectory data from previous agricultural product application rounds, or other uses, are stored. Further alternatively, tramlines may be determined from user input. While depicted **in** Figure 1B as a pair of lines, within the current disclosure, tramlines 4 may additionally or alternatively, refer to single line trajectories forming a pattern through the agricultural field, such as a digital trajectory projected on a digital image of the field, thereby representing the path of the agricultural machine 30 and not literally the marks left in the field. Analogously, crop rows may be determined similarly to how the tramlines are detected, by means of processing of remote imagery, since patterns with a specific repetition frequency on a field can be determined equally, as explained in WO 2023/247229 A1.

Hence, according to a further embodiment, the specific dimension may be the distance between neighboring tramlines 4 or the distance between neighboring crop rows 3. Based on the distance between tramlines 4 or crop rows 3, the width of the parallelograms, the width being defined as the dimension perpendicular to the moving direction of the agricultural machine 30, can be adjusted to be substantially equal to the distance between tramlines or crop rows, defined from the center of said crop rows or tramlines. In this case, the parallelogram spans the whole application range of the agricultural machine 30 on both sides thereof and the application rate is determined equal for both left and right side of the agricultural machine 30.

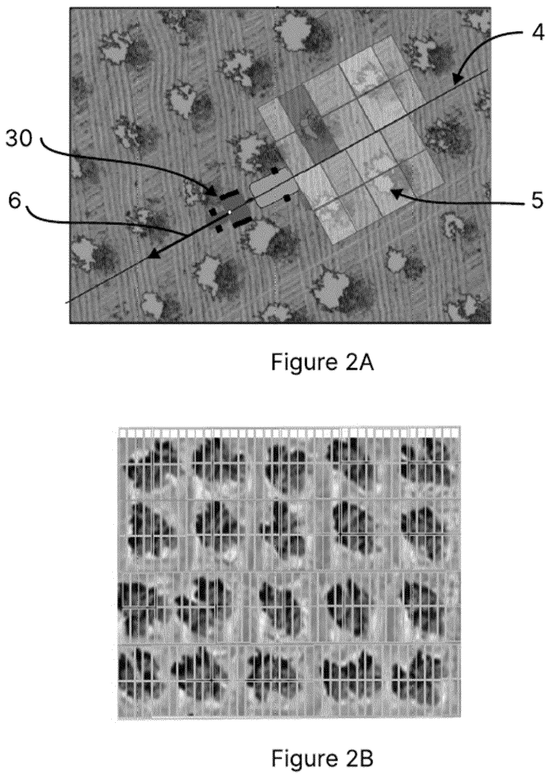

According to a further embodiment, the width of the parallelograms is defined as half the crop row 3 spacing or the tramline 4 spacing. Different embodiments following this current embodiment are depicted in Fig. 2A and 2B, wherein fig. 2A shows a portion of the grid, where the agricultural machine has already passed and applied the agricultural product, comprising rectangles and squares of different length, whereas fig. 2B shows a regular grid with rectangles of constant length. Following this embodiment, different application rates for each side of the agricultural machine can be determined, hereby allowing a greater flexibility and accuracy of application of the agricultural product.

Based on the previous embodiments, advantageous modifications can be envisaged, wherein the generation of a grid of polygons in the more general case, or parallelograms, is carried out such that at least one polygon is defined. The at least one polygon is preferably centered at the elements of the crop rows, in the dimension along the moving direction 6 of the agricultural machine, with approximate length, alternately the dimension of the plants or trees (see, e.g., the darker greyed out polygon in the figure 2A), and the dimension of the spacing between plants or trees in the rows (see polygons defined in fig. 2A). This is represented, approximately, in fig. 2A, wherein the polygons not enclosing plants or trees can be either skipped in the step of determining an agricultural property for the generated grid of polygons. Alternatively, the contribution of polygons not enclosing plants or trees to the final application map can be neglected by setting their agricultural property value equal to zero. Advantageously, the computational effort of generating an irregular grid can thereby be reduced.

According to a further embodiment, a further modification can be envisaged in which a polygon is centered on the tramline, wherein the width of the polygon can be determined according to usual width dimensions of agricultural machines such as tractors, e.g. 2 m. The length of such a polygon may be defined to be substantially equal to the length of the tramline in the whole agricultural field or to be the same as the corresponding polygons left and/or right enclosing the tree or plant, or the spacing between adjacent trees or plants. The row of polygons defined thereby can optionally be skipped in the step of determining an agricultural property for the generated grid of polygons, hereby avoiding the increased computational effort of generating an irregular grid.

According to a further embodiment, with reference to fig. 3B, generating a grid of polygons comprises determining 133 an orientation of at least one of the tramlines or crop rows, at least one of rotating 134 the generated grid of polygons or translating the grid to match the tramlines or crop rows, so as to match the determined orientation. From imagery data, as explained above and with reference to WO 2023/247229, not only the distance between crop rows 3 or tramlines 4 can be determined, but also their orientation, hereby allowing a precise rotation of the generated grid of polygons to automatically match with the driving direction of the agricultural machine 30.

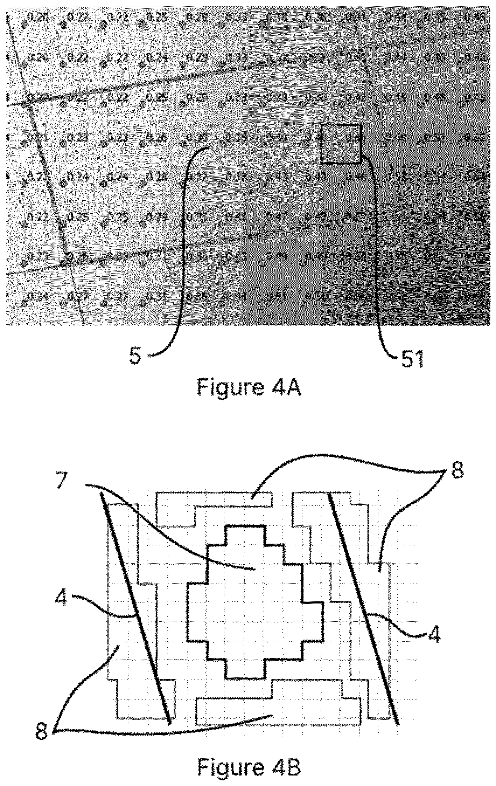

According to a further embodiment, determining an agricultural property for the generated grid of polygons comprises determining the number of pixels comprised in a polygon. Determining the agricultural property further includes generating an agricultural property value for the determined pixels and determining an agricultural property amount for the polygons based on the agricultural property value for the determined pixels comprised in each polygon. This is schematically shown in fig. 4A, wherein a plurality of pixels 51 within the polygon 5 can be seen, and an associated value for each pixel is shown. The resulting agricultural property value may be based on at least one of an average value of the pixel values, a median value of the pixel values, a maximum value of the pixel values, a minimum value of the pixel values, or a cumulative sum of the pixel values.

According to a further embodiment, determining the number of pixels comprised in a polygon further comprises identifying the number of pixels unrelated to the row crop. Generating an agricultural property value for the determined pixels then comprises excluding the identified pixels unrelated to the row crop. Alternatively to the embodiments disclosed above, the polygons may be defined such that they enclose the tramlines, if present, and, alternatively the trees or plants and the aforementioned spacing between adjacent trees or plants within a row. Herein, a different approach can be envisaged in which a mask function, detailed hereinbelow, is generated which comprises the pixels pertaining to the tramlines and/or to the spaces between plants, thereby reducing the number of pixels for which the agricultural property value has to be determined. Advantageously, challenges of dealing with an irregular grid leaving out areas unrelated to the crop can thereby be avoided and the computational effort can be reduced accordingly.

According to the present disclosure, "masking" or a "mask function" refers to the application of data processing tools for the selection of specific pixels within an image or image data. By masking, the information outside a specific area or portion of an information carrying signal is selected, or occluded, or eliminated, in order to focus the processing at a specific region of interest. Within the current application, both masking image data or masking bits within the digital data or imagery can be utilized. Due to the duality of image data represented as any two-dimensional array of data, masking within the current disclosure may refer to any data processing tools which select, or occlude, a subset of elements from the two-dimensional array of data, or any image processing tools which selects or occludes specific subsets of pixels.

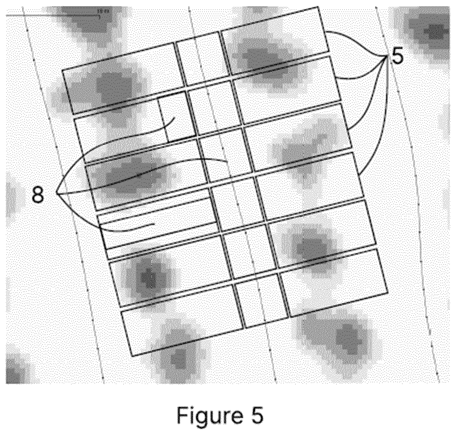

The current embodiment is schematically shown in fig. 4B. Based on the determined tramlines 4 and/or crop rows, a mask function 8 containing pixels unrelated to the crop can be generated. The mask function selects the pixels containing said tramlines and/or the space between crop row elements, contrary to the pixels containing the crop row elements 7 themselves. Following this embodiment, a regular grid can still be generated, hereby reducing the computational effort of the method. The masked pixels further reduce the amount of pixels for which an agricultural property has to be determined, thereby further reducing the computational effort and producing a more accurate application map, since pixels which could contribute to the agricultural property amount are correctly discarded (e.g. due to cover crops having a certain agricultural property value which should be disregarded). As disclosed in WO 2023/247229 A1, once the pattern elements are determined (either crop rows, tramlines or crop row elements) pixels containing or, alternatively not containing, the pattern elements can be defined. Said pixels, and optionally neighboring pixels, which may be pixels that are determined to be within a predetermined distance of the pattern elements, are determined to be unrelated to the crop. A further example of such an embodiment can schematically be seen in fig. 5, wherein a grid of polygons 5 is generated. The grid of polygons comprises different regions excluded by means of mask function 8, hereby excluding pixels unrelated to the crop. Here, the row of polygons defined as centered on the tramlines, together with further regions defined within the remaining polygons covering the row crops, contribute towards a more accurate product application since any vegetation present in these areas is excluded from contributing to the agricultural product rate determined for the application map, hereby improving the accuracy.

According to a further embodiment, alternatively to or jointly with the previous embodiment, receiving remote imagery of the agricultural field further comprises receiving historic remote imagery from the on-going season or previous seasons, processing the historic remote imagery and adjusting the agricultural property amount based on the received historic remote imagery.

Following this embodiment, further insights regarding the agricultural property can be gained by, for example, comparing the crop status with prior states in time within the crop season or with previous seasons, hereby comparing field data from previous seasons with the current status of the crop.

According to a further embodiment, processing the historic remote imagery further comprises identifying at least one of cover crops or weed pixels, and adjusting the agricultural property based on the identified at least one of cover crops or weed pixels.

Following this embodiment, it can be determined from further remote imagery at different points in time if the agricultural field comprises cover crops, identified by constant "green" coverage of the agricultural field throughout the season, or weeds, identified by quickly growing "green" spots outside of constant "green" pixels between remote imagery data from consecutive dates, and the agricultural property amount of the polygon can be adjusted based thereon.

According to a further embodiment, processing the historic remote imagery further comprises receiving the row crop type and carrying out at least one of background subtraction, clustering, thresholding based on the row crop type.

Following this embodiment, based for example on the crop type, e. g. for this case perennial or deciduous, historic remote imagery can be selected according to a specific time of the season to further characterize pixels within the polygons unrelated to the crop. By perennial crops, for example, receiving historic remote imagery at different times in the year can give a clearer indication of where the tramlines can be located, avoiding the problem of identifying crop rows or tramlines covered by cover crops or weeds (which may be stationary or limited in the time span in which they are present in the images).

According to a further embodiment, the method further comprises producing a machine-readable script based on the variable rate application map. The produced script can be automatically transmitted by means of the communication unit or output via the output means for a user to manually upload the script to the respective machinery for carrying out the application of the agricultural product. However, the methods of the current disclosure are not limited to any specific data or communication format.

According to a further embodiment, the method further comprises implementing the variable application rate by means of an agricultural machine 30 configured to carry out the agricultural product application.

According to a further embodiment, agricultural machine 30 comprises at least one acoustic or optical sensor configured to detect the presence of the row crop. According to the current embodiment, the agricultural machine 30 is configured to receive crop presence information from the acoustic or optical sensor. The processing unit 33 is configured to stop the agricultural product application upon receiving information that no crop is present. Following this embodiment, despite the application map indicating a predetermined product application, the agricultural machine 30 allows a further optimization of the product application based on ground sensing, hereby improving the current approach.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded **in** accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill **in** the art to make and use the disclosure when combined with information and knowledge available to the person having ordinary skill in the art.

## Claims

1. A computer-implemented method of generating a variable rate application map of an agricultural product for row crops in an agricultural field, wherein the method comprises:
- determining an agricultural field comprising a row crop;
- receiving remote imagery of the agricultural field;
- generating a grid of polygons;
- determining an agricultural property for the generated grid of polygons based on the received remote imagery;
- determining an agricultural product application rate for the grid of polygons based on the determined agricultural property;
- generating a variable rate application map of the agricultural product for the agricultural field based on the determined agricultural product application rate for the grid of polygons.

2. A method according to claim 1, further comprising determining at least one of a first dimension and/or a second dimension of the polygons based on at least one of an agricultural machine property, a predetermined constraint, crop data or field data.

3. A method according to claim 1, wherein the polygons are parallelograms and wherein generating a grid of parallelograms comprises:
- determining at least one of tramlines and/or crop rows present in the agricultural field;
- determining at least one specific dimension based on the determined tramlines and/or row crops; and
- defining the parallelogram width based on the determined specific dimension.

4. A method according to claim 1, wherein generating a grid of polygons comprises:
- determining an orientation of the at least one of tramlines or crop rows; and
- at least one of rotating the generated grid of polygons to match the determined orientation or translating the grid to match the tramlines or crop rows.

5. A method according to claim 3, wherein determining an agricultural property for the generated grid of polygons comprises:
- determining the number of pixels comprised in a polygon;
- generating an agricultural property value for the determined pixels; and
- determining an agricultural property amount for the polygons based on the agricultural property value for the determined pixels comprised in the polygon.

6. A method according to claim 5, wherein determining the number of pixels comprised in the polygon further comprises identifying the number of pixels unrelated to the row crop.

7. A method according to claim 1, wherein receiving remote imagery of the agricultural field further comprises receiving historic remote imagery from the on-going or previous seasons, processing the historic remote imagery and adjusting the agricultural property amount based on the received historic remote imagery.

8. A method according to claim 7, wherein processing the historic remote imagery further comprises identifying at least one of cover crops or weed pixels, and adjusting the agricultural property comprises adjusting the agricultural property based on the identified at least one of cover crops or weed pixels.

9. A method according to claim 7, wherein processing the historic remote imagery further comprises receiving row crop type and carrying out at least one of background subtraction, clustering, thresholding based on the row crop type.

10. A method according to claim 1, wherein the method further comprises producing a machine-readable script based on the variable rate application map.

11. A method according to claim 1, wherein the method further comprises implementing the variable application rate by means of an agricultural machine configured to carry out the agricultural product application.

12. A data processing apparatus comprising means for carrying out the method of any one of the claims 1 to 11.

13. An agricultural apparatus comprising a data processing apparatus according to claim 12, configured to carry out the method of any one of claims 1 to 11.

14. A computer-readable storage medium comprising instructions which, when executed by a computer system, cause the computer to carry out the method of any one of the claims 1 to 11.

15. A computer program product comprising instructions which, when the program is executed by a computer system, cause the computer to carry out the method of any one of the claims 1 to 11.
